# FASCICULE DE BREVET EUROPEEN

(11) **EP 4 105 051 B1**
(45) Date de publication et mention de la délivrance du brevet: **20.03.2024**
(21) Numéro de dépôt: 22178008.3
(22) Date de dépôt: 09.06.2022
(51) Int. Cl.: B60K 11/04, F16B 5/06, F28F 9/00

(54) **SUPPORT DE SUSPENSION D'UNE PIÈCE AUTOMOBILE COMPRENANT UNE BUTÉE ÉLASTIQUE ROTATIVE**
AUFHÄNGUNGSLAGER FÜR EIN KRAFTFAHRZEUGTEIL MIT EINEM DREHBAREN ELASTISCHEN ANSCHLAG
SUPPORT FOR A MOTOR VEHICLE PART COMPRISING A ROTARY ELASTIC STOP

(30) Priorité: 16.06.2021 FR 2106369
(43) Date de publication de la demande: 21.12.2022
(73) Titulaire: Delmon Group, 75001 Paris (FR)
(72) Inventeur: SKIERA, Jean François, 58340 CERCY-LA-TOUR (FR); LEFEBVRE, Quentin, 46600 GIGNAC (FR); GOUYGOU, François, 47270 Saint Martin de Beauville (FR)
(74) Mandataire: Ipside

(56) Documents cités:
- EP-A2- 2 161 529
- WO-A1-2014/203906
- FR-A1- 3 034 826

## Description

### DOMAINE TECHNIQUE DE L'INVENTION

Le domaine de l'invention est celui de la suspension d'organes ou de sous-ensembles de pièces automobiles sur un châssis automobile.

Plus précisément, l'invention concerne un support de suspension comprenant une butée élastique rotative, pour la suspension d'une pièce, d'un organe ou d'un sous-ensemble automobile, en particulier d'un cadre d'échangeur thermique, sur un châssis automobile.

L'invention trouve application dans le domaine automobile pour la suspension de pièces soumises à des fortes variations de température, et en particulier dans la suspension de cadres d'échangeurs thermiques, pouvant comporter notamment le radiateur de refroidissement moteur, le condenseur de climatisation, le refroidisseur d'huile, le refroidisseur d'air, etc.

### ÉTAT DE LA TECHNIQUE

Il est connu de l'art antérieur des techniques de suspension de pièces, d'organes ou de sous-ensembles automobiles, ci-après désignés par le terme générique « pièce automobile », sur des châssis automobiles. FR 3 034 826 A1 divulgue un dispositif de fixation d'un radiateur de véhicule automobile sur une traverse du véhicule.

En particulier, dans le domaine de la suspension d'échangeurs thermiques de véhicules automobiles, le cadre supportant les éléments d'échangeur thermique est soumis à des fortes variations de température, entre jusque -40 °C et 140°C, qui induisent des dilatations thermiques dans le cadre. L'amplitude de ces dilatations peut atteindre 3 millimètres selon l'axe Y du véhicule, et 1,5 millimètres selon l'axe Z du véhicule. En général, les dilatations selon l'axe X sont négligeables, la dimension de l'échangeur thermique en X étant réduite devant les dimensions de l'échangeur thermique en Y et en Z.

Habituellement, les cadres d'échangeur thermique sont fixés au châssis en deux points supérieurs et en deux points inférieurs. Les points supérieurs ne reprennent généralement que des efforts en X et autorisent un glissement en Y et en Z, de manière à ne pas contraindre les points de fixation dans ces directions. Les points inférieurs quant à eux reprennent les efforts dans les trois directions, afin de maintenir le cadre en place sur le véhicule.

Un cadre d'échangeur thermique qui serait fixé de manière rigide au niveau des points inférieurs serait exposé à des tensions au niveau de ces points en cas de dilatation thermique, pouvant avoir comme conséquence une détérioration du cadre, des éléments d'échangeur thermique, des points de fixation inférieurs, voire éventuellement du châssis. En particulier, les éléments précités peuvent se déformer ou rompre sous l'effet des contraintes induites par la dilatation thermique, ainsi que par les dispersions géométriques des points de fixation. De plus, bien souvent, les pièces constituant l'échangeur thermiques sont réalisées à partir de matériaux tels que l'aluminium ou le polyamide, qui sont des matériaux particulièrement légers, mais également particulièrement vulnérables à des efforts importants qui seraient exercés sur ces derniers.

Afin de pallier à cet inconvénient, des solutions de fixation autorisant un degré de liberté selon l'axe Y et/ou selon l'axe Z ont été mises au point.

En particulier, une solution connue est la fixation aux niveaux des points inférieurs par vissage sur le châssis à travers une ouverture oblongue du cadre, permettant un glissement du cadre d'échangeur thermique par rapport au châssis lorsque les efforts deviennent trop importants.

De telles solutions n'étant pas satisfaisantes en termes de suspension, de rigidité et de maintien en position du cadre, d'autres techniques de fixation ont été développées. En effet, notamment en termes de suspension, c'est-à-dire de filtrage de vibrations, les exigences des constructeurs automobiles sont de plus en plus élevées.

En particulier, des supports de suspension pour les points de fixation inférieurs, présentant une rigidité réduite selon les axes Y et Z, sont connus de la technique.

Par exemple, on connaît des supports de suspension en forme de plots de révolution clipsés sur le châssis du véhicule, ou un élément de caisse du véhicule, et présentant une raideur radiale faible. Deux pions d'un piétement du cadre de l'échangeur thermique sont logés dans une ouverture respective de chaque plot, de manière à verrouiller le déplacement selon l'axe X et Y. La position en Z est quant à elle verrouillée par vissage au cadre de l'échangeur thermique. De cette manière, une dilatation thermique du cadre induit une déformation élastique des plots, permettant d'éviter toute tension dans la structure.

De telles solutions ne permettent cependant pas de maîtriser les raideurs de manière satisfaisante, notamment car il existe une précontrainte dans les points de fixation, en particulier selon l'axe Y, pouvant par exemple être générée par des dilatations, des jeux apparaissant après montage, des glissements entre les pièces, etc.

En d'autres termes, la raideur des points de fixation selon l'axe Y - nécessaire pour obtenir un filtrage des fréquences selon les exigences des constructeurs automobiles - n'est pas indépendante de la position sur l'axe Y du cadre d'échangeur thermique.

Afin de pallier ces inconvénients, des techniques de support de suspension visant à découpler la raideur selon l'axe Y du déplacement selon l'axe Y ont été développées. En particulier, des techniques de support de suspension réalisant une suspension indépendante selon l'axe Y, solidarisés à un côté droit et gauche du cadre d'échangeur thermique, sont connues.

Cependant, ces solutions de suspension nécessitent systématiquement la fabrication d'une paire de supports de suspension symétriques, c'est à dire d'un support de suspension droit et d'un support de suspension gauche.

Cet inconvénient a des répercussions importantes en termes d'organisation de la fabrication, de logistique, de stockage, et de montage. En particulier, il est notamment nécessaire de s'assurer en permanence de la bonne quantité de supports droit et gauche fabriqués, commandés, stockés, etc. Il en résulte des coûts économiques importants, en particulier dans le domaine automobile qui traite un volume important de pièces détachées.

Ainsi, aucun des systèmes actuels ne permet de répondre simultanément à tous les besoins requis, à savoir de proposer une technique de support de suspension pour cadre d'échangeur thermique qui réponde aux exigences en termes de suspension tout en étant simple à fabriquer et pouvant être utilisé indifféremment comme support de suspension droit ou gauche.

### EXPOSÉ DE L'INVENTION

La présente invention vise à remédier à tout ou partie des inconvénients de l'état de la technique cités ci-dessus.

À cet effet, l'invention vise, un support de suspension d'une pièce automobile, en particulier d'un cadre d'échangeur thermique, sur un châssis automobile, ledit support prenant la forme globale d'une plaque comportant un plan principal, et ledit support comprenant :
- une armature extérieure comportant un organe de fixation audit châssis automobile,
- une armature intérieure configurée pour être emmanchée sur une goupille de ladite pièce automobile, selon une direction perpendiculaire audit plan principal,
- un élément de suspension élastique disposé entre ladite armature extérieure et ladite armature intérieure,

ledit support comprenant :
   - un pion saillant de l'armature extérieure et s'étendant dans ledit plan principal, et,
   - une butée élastique longiforme emmanchée transversalement, par une première extrémité, sur ledit pion,
ladite butée élastique et ledit pion étant configurés de manière à ce que ladite butée élastique soit apte à prendre une pluralité de positions angulaires autour dudit pion, dont au moins :
   - une première position angulaire d'utilisation, dite position angulaire d'utilisation droite, dans laquelle ladite butée élastique saille du plan principal, d'un premier côté dudit plan principal,
   - une seconde position angulaire d'utilisation, dite position angulaire d'utilisation gauche, dans laquelle ladite butée élastique saille du plan principal, d'un second côté dudit plan principal,
ladite butée élastique étant configurée pour être attelée par sa seconde extrémité à ladite pièce automobile lorsqu'elle se trouve dans l'une des positions angulaires d'utilisation.

Ainsi, le support de suspension réalise une suspension performante, par la combinaison d'un élément de suspension élastique travaillant principalement selon les axes X et Z du véhicule, et d'une butée élastique travaillant principalement selon l'axe Y du véhicule, et qui permet une suspension suffisamment rigide tout en compensant les dilatations et rétractations thermiques.

De plus, la butée élastique joue un rôle de limitation du degré de liberté en Y du cadre d'échangeur thermique, c'est-à-dire un rôle de positionnement de la pièce automobile, en plus de son rôle de compensation des dilatations selon l'axe Y, grâce à ses propriétés élastiques.

La prise d'une pluralité de positions angulaires, et en particulier des positions angulaires d'utilisation, permet d'adapter le support de suspension au côté droit et au côté gauche de la pièce automobile. En d'autres termes, un seul type de support de suspension est suffisant pour la suspension de la pièce automobile, deux supports de suspension identiques pouvant être transformés respectivement en support droit et gauche par simple rotation de la butée élastique.

L'attelage de la butée élastique à la pièce automobile permet de garantir une fonction de positionnement également lorsque la butée élastique est sollicitée en traction, et non seulement lorsqu'elle est sollicitée en compression. Notamment lorsque la dilatation ou rétractation est asymétrique à travers la pièce automobile, chaque butée élastique d'un support de suspension peut jouer son double rôle de compensation et de positionnement, indifféremment du type de contrainte exercé.

Ainsi, grâce à ces dispositions, on obtient un support de suspension qui permet de répondre à toutes les exigences de suspension, notamment en ce qui concerne le filtrage des vibrations, tout en évitant toute contrainte excessive dans la structure châssis-support-pièce automobile, et qui contribue au bon positionnement de la pièce automobile sur le châssis. Tous ces avantages techniques sont obtenus au moyen d'une pièce unique pouvant être configurée pour former un support de suspension droit ou gauche, se traduisant en une rationalisation de la production, logistique, montage et induisant une forte réduction du coût économique lié à la mise en oeuvre des supports de suspension dans un véhicule automobile.

Selon une variante, la butée élastique et le pion sont en outre configurés de manière à ce que ladite butée élastique soit apte à prendre une position angulaire de rangement, dans laquelle ladite butée élastique est située dans ledit plan principal sans saillir de ce dernier.

Grâce à ces dispositions, la butée élastique est maintenue dans une position « neutre », de rangement, sans saillir du plan principal du support de suspension, permettant ainsi un conditionnement plus simple, un gain de place lors du stockage, etc. De plus, toute détérioration de la butée élastique avant sa mise en place sur la pièce automobile peut ainsi être évitée.

Selon une variante, ladite butée élastique comporte une ouverture sur sa première extrémité, l'ouverture étant pratiquée selon une direction transversale de la butée élastique, et dans lequel la forme de la section du pion et la forme de l'ouverture sont complémentaires, la butée élastique emmanchée sur le pion étant apte à :
- prendre une pluralité de positions caractéristiques distinctes, dont la première et la seconde position angulaire d'utilisation et la position angulaire de rangement, et
- passer d'une position caractéristique à une autre par la combinaison d'une rotation autour du pion et d'une déformation élastique de l'ouverture.

Grâce à la correspondance des formes, les positions caractéristiques sont « stables ». En effet, un certain effort est à fournir pendant la rotation lors du passage d'une position caractéristique à une autre, correspondant à l'effort à fournir pour la déformation élastique de la butée. Ainsi, les positions caractéristiques ne sont pas modifiées accidentellement.

On précise qu'avantageusement, dans les positions angulaires d'utilisation, la butée élastique saille orthogonalement au plan principal du support de suspension. La position de rangement est quant à elle une position dans laquelle la butée élastique est située dans ledit plan principal. En d'autres termes, le passage de la position angulaire d'utilisation gauche à la position angulaire de rangement, et le passage de la position angulaire de rangement à la position d'utilisation angulaire droite se font par une rotation de 90° dans un premier sens, et dans un sens inverse pour les passages inverses. Ainsi, avantageusement la forme de l'ouverture de la butée élastique et de la section du pion est une forme géométrique invariante par rotation d'un angle droit, de manière à définir des positions angulaires stables tous les 90°.

Selon une variante, la forme de la section du pion et la forme de l'ouverture sont des formes polygonales complémentaires.

Le choix de polygones pour les formes de l'ouverture de la butée élastique et de la section du pion est particulièrement avantageux, car ces formes sont simples à fabriquer, et avantageusement de nombreux polygones invariants par rotation d'un angle droit peuvent être choisis, comme par exemple un carré ou un octogone. En particulier, on choisit des polygones réguliers. On précise que la notion de polygone n'est pas nécessairement entendue strictement, au sens mathématique, mais que notamment les sommets de polygones peuvent être adoucis par des congés, par exemple. Bien entendu, une forme circulaire peut également être envisagée, bien qu'une telle forme ne présente pas de position angulaire « stable ».

Selon une variante, lesdites formes polygonales complémentaire sont des carrés.

Le choix d'un carré pour les formes de l'ouverture de la butée élastique et de la section du pion est particulièrement avantageux, car il s'agit du polygone invariant par rotation d'un angle droit le plus simple à mettre en oeuvre, et le moins coûteux à fabriquer. De plus, il présente l'avantage de nécessiter la plus grande déformation élastique, résultant en une position particulièrement stable.

Selon une variante, ladite butée élastique comporte un élément élastique d'attelage à ladite pièce automobile sur sa seconde extrémité, ledit élément élastique d'attelage comportant un moyen de retenue de l'élément élastique d'attelage dans la pièce automobile.

Grâce à ces dispositions, la butée est retenue dans la pièce automobile et un certain effort est nécessaire pour la retirer, diminuant le risque de tout désattelage accidentel.

Selon une variante, ledit élément élastique d'attelage est une tête d'attelage formée directement dans la butée élastique.

De cette manière, l'élément élastique d'attelage peut être obtenu en une étape de production en même temps que la butée élastique, par exemple par moulage dans un moule comportant la tête d'attelage. De plus, la continuité du matériau permet d'améliorer la résistance de la butée élastique face aux efforts de compression et de traction.

Selon une variante, ladite tête d'attelage est de forme générale d'un harpon présentant une pointe et une surface d'appui orientée en opposition à ladite pointe, ladite tête étant ainsi apte à être insérée, par déformation élastique, dans une lumière de ladite pièce automobile, et à être retenue dans ladite lumière par une surface interne de la lumière formant butée avec ladite surface d'appui de la tête, qui forme ainsi un moyen de retenue de l'élément élastique dans la pièce automobile.

Ainsi, on comprend que la tête d'attelage peut être introduite aisément (grâce à la forme de harpon, ou de flèche, concourante vers la pointe de la tête) dans la lumière de la pièce automobile, en la déformant élastiquement, et de façon à ce que la tête d'attelage soit retenue dans la lumière lorsqu'elle revient à sa forme initiale. En effet, la tête d'attelage est prévue pour être plus large que la lumière, de manière à ce que la surface d'appui de la tête d'attelage vienne buter contre la surface interne de la lumière, empêchant tout retrait accidentel. On comprend également qu'il est possible de retirer la tête d'attelage en tirant sur la butée élastique, de manière à déformer la tête d'attelage et la faire passer par la lumière dans l'autre sens. Cependant, l'effort à appliquer est beaucoup plus important que lors de l'insertion, la surface d'appui de la tête s'opposant au retrait.

Selon une variante, ladite butée élastique est en matériau élastomère, et en particulier en éthylène-propylène-diène monomère, dit EPDM.

De cette manière, on confère les propriétés élastiques, de résistance et de rigidité nécessaires à la butée élastique par l'emploi d'un matériau couramment disponible, simple à mettre en forme, et peu coûteux.

En particulier, l'EPDM est vulcanisé au peroxyde, pour une meilleure résistance à la température, au vieillissement, aux produits chimiques, etc.

L'invention a également pour objet un véhicule automobile comprenant un châssis, une pièce automobile à suspendre et au moins un support de suspension d'une pièce automobile selon l'invention.

Selon une variante, la pièce automobile à suspendre est un cadre d'échangeur thermique, le véhicule comprenant
- un support de suspension dit droit, emmanché et attelé audit cadre d'échangeur thermique d'un premier côté, dit côté droit, et
- un support de suspension dit gauche, emmanché et attelé audit cadre d'échangeur thermique d'un second côté, dit côté gauche,
lesdits supports de suspension droit et gauche étant fixés audit châssis et
- la butée élastique dudit support de suspension droit prenant une position angulaire d'utilisation gauche, et
- la butée élastique dudit support de suspension gauche prenant une position angulaire d'utilisation droite.

De cette manière, le support de suspension selon l'invention est mis en oeuvre dans un véhicule afin de remplir son double rôle de suspension et de positionnement, tout en prenant à la fois sa configuration « droite » et « gauche ».

On précise toutefois que le support de suspension selon l'invention pourrait être mis en oeuvre sur toute pièce automobile susceptible d'être suspendue et soumise à des variations de température, telle qu'une ligne d'échappement par exemple.

Enfin, l'invention a également pour objet un procédé de montage d'une pièce automobile sur un châssis automobile au moyen de deux supports de suspension selon l'invention, comprenant les étapes de :
- emmanchement d'un support de suspension droit, respectivement gauche, sur une goupille droite, respectivement gauche, de la pièce automobile,
- rotation de la butée élastique dudit support de suspension droit, respectivement gauche, dans la position angulaire d'utilisation gauche, respectivement droite,
- attelage de la butée élastique dudit support de suspension droit, respectivement gauche, sur un côté droit, respectivement gauche, de la pièce automobile,
- fixation des supports de suspension droit et gauche sur ledit châssis.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la [Fig 1] représente une vue en perspective du support de suspension selon l'invention, la butée élastique étant dans la position angulaire d'utilisation droite ;
- la [Fig 2] représente une vue en perspective du support de suspension selon l'invention, la butée élastique étant dans la position angulaire d'utilisation gauche ;
- la [Fig 3] représente une vue en perspective du support de suspension selon l'invention, la butée élastique étant dans la position angulaire de rangement ;
- la [Fig 4] représente une vue en perspective du la butée élastique isolée ;
- la [Fig 5] représente une vue en perspective d'un détail montrant le pion du support de suspension,

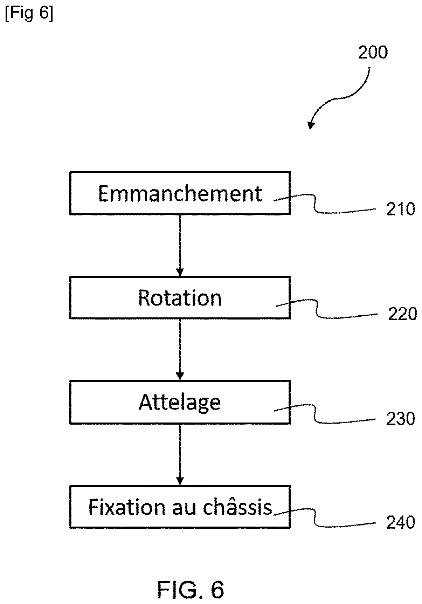

- la [Fig 6] est un schéma synoptique du procédé de montage selon l'invention.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

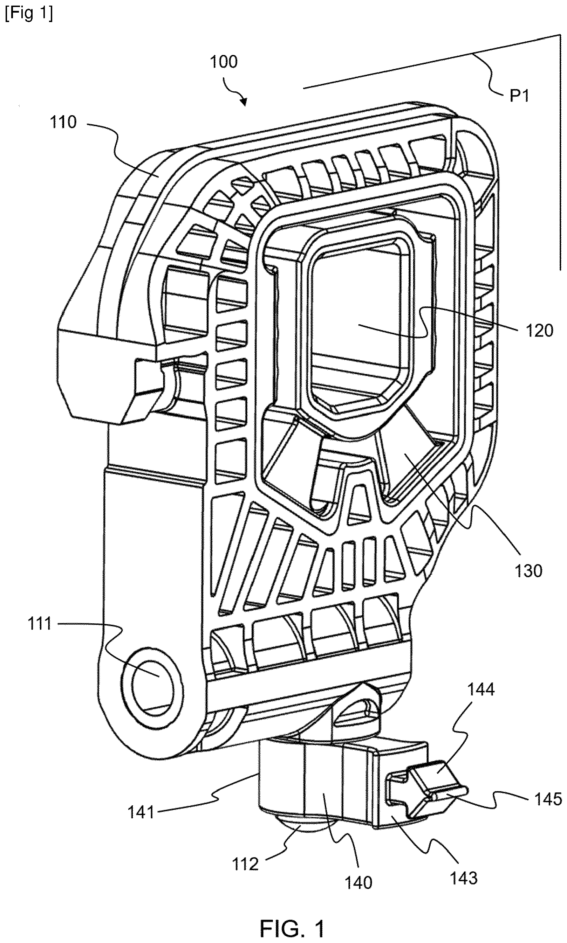

La figure 1 représente un support 100 de suspension d'une pièce automobile, en particulier d'un cadre d'échangeur thermique, selon l'invention. Dans la description qui suit, toute référence au cadre d'échangeur thermique est généralisable à une pièce automobile générique que l'on souhaite suspendre sur un châssis automobile.

En particulier, le support 100 de suspension est un support d'un point de fixation inférieur d'un échangeur thermique.

Le support 100 prend la forme globale d'une plaque comportant un plan principal P1. Dans le référentiel du véhicule, ce plan est normal à l'axe Y du véhicule.

Le support 100 comprend une armature extérieure 110, qui définit les dimensions de la forme globale de plaque du support 100. L'armature extérieure 110 est par exemple réalisée en matériau plastique, tel du polyamide. Comme cela est visible sur la figure 1, l'armature extérieure 110 peut comporter des évidements et des nervures visant une économie de matériau et une réduction de la masse.

En outre, l'armature extérieure 110 comporte un organe de fixation au châssis automobile sous la forme d'une entretoise 111 logée dans une ouverture de l'armature extérieure 110. La fixation du support 100 de suspension sur une traverse d'un châssis de véhicule peut ainsi être réalisée par vissage au moyen d'une vis introduite dans l'entretoise 111.

Le support 100 de suspension comprend également une armature intérieure 120. L'armature intérieure 120 se présente sous la forme d'une bague, par exemple en matière plastique teldu polyamide. De cette manière, l'armature intérieure 120 est configurée pour être emmanchée sur une goupille du cadre d'échangeur thermique, selon une direction perpendiculaire au plan principal P1. On comprend ainsi que l'armature intérieure 120 est simplement glissée sur la goupille (droite ou gauche) du cadre d'échangeur thermique et laisse un degré de liberté selon l'axe Y du véhicule.

Le support 100 comprend un élément de suspension élastique 130 disposé entre l'armature extérieure 110 et l'armature intérieure 120, permettant de réaliser une fonction de suspension du support de suspension 100. En effet, l'élément de suspension élastique 130 est réalisé selon une forme et avec des matériaux qui permettent de réaliser une suspension performante selon les axes X et Z, et dans une moindre mesure Y, du véhicule. L'élément élastique 130 jouant un rôle de filtre vibratoire, il est également appelé élément de « découplage ».

Préférentiellement, le matériau de l'élément de suspension élastique 130 est de l'éthylène-propylène-diène monomère, dit EPDM, mais tout autre matériau élastomère peut être envisagé.

Comme il a été décrit ci-dessus, un degré de liberté en Y subsiste, l'armature intérieure 120 étant emmanchée légèrement glissante sur la goupille du cadre d'échangeur thermique, qu'il convient de limiter afin de garantir le bon positionnement du cadre d'échangeur thermique, en toutes circonstances. Cependant, comme il a également été présenté plus en amont, il n'est pas souhaitable de contraindre le support en Y, afin d'éviter l'apparition de contraintes trop importantes dans la structure. De plus, bien que l'élément de suspension élastique 130 permette de compenser les dilatations en Y, ce dernier ne présente pas de raideur suffisante selon l'axe Y, car il est particulièrement souple dans cette direction (l'élément de suspension élastique 130 présente, de par sa conception géométrique, une raideur satisfaisante selon l'axe X et Z uniquement). Afin de pallier cet inconvénient, une butée élastique 140, de raideur satisfaisante selon l'axe Y (en particulier pour amortir un mode propre de l'échangeur thermique, compris entre environ 15 et 20 Hz, et plus préférentiellement entre environ 16 et 19 Hz) est montée sur le support 100 de suspension. La raideur de la butée élastique 140 selon l'axe Y est choisie de manière à ce que la raideur totale du support 100 de suspension selon l'axe Y permette d'obtenir le comportement dynamique souhaité de l'échangeur thermique selon l'axe Y.

Plus précisément, le support 100 de suspension comprend, sur l'armature extérieure 110, un pion 112 saillant de l'armature extérieure 110 et s'étendant dans le plan principal P1, la butée élastique 140 longiforme étant emmanchée transversalement, par une première extrémité 141, sur le pion 112.

La butée élastique 140 joue un double rôle de limitation du degré de liberté en Y du cadre d'échangeur thermique, c'est-à-dire un rôle de positionnement, et de compensation des dilatations selon l'axe Y, grâce à ses propriétés élastiques. En effet, la butée élastique 140 est réalisée d'une pièce en matériau élastomère, et en particulier en éthylène-propylène-diène monomère, dit EPDM.

La butée élastique 140 est de forme longiforme, et plus préférentiellement de la forme générale d'un pavé de hauteur et largeur sensiblement égales, et de longueur significativement supérieure à la hauteur et la largeur. En particulier, la hauteur et la largeur sont du même ordre de grandeur que l'épaisseur du support 100 de suspension, et la longueur étant de l'ordre du double de l'épaisseur du support 100.

Afin que le support 100 de suspension puisse être utilisé indifféremment comme support de suspension droit ou gauche, la butée élastique 140 et le pion 112 sont configurés de manière à ce que la butée élastique 140 soit apte à prendre une pluralité de positions angulaires autour du pion 112.

En particulier, la butée élastique 140 peut prendre deux positions angulaires caractéristiques.

La butée élastique 140 peut prendre une première position angulaire d'utilisation, dite position angulaire d'utilisation droite, dans laquelle la butée élastique 140 saille du plan principal P1, d'un premier côté du plan principal P1, comme cela est représenté à la figure 1. En particulier, on observe que la butée élastique 140 saille à angle droit du plan principal P1.

En d'autres termes, dans la position angulaire d'utilisation droite, la butée élastique 140 est orientée selon l'axe Y du véhicule, vers la droite du véhicule (selon le référentiel habituel en automobile).

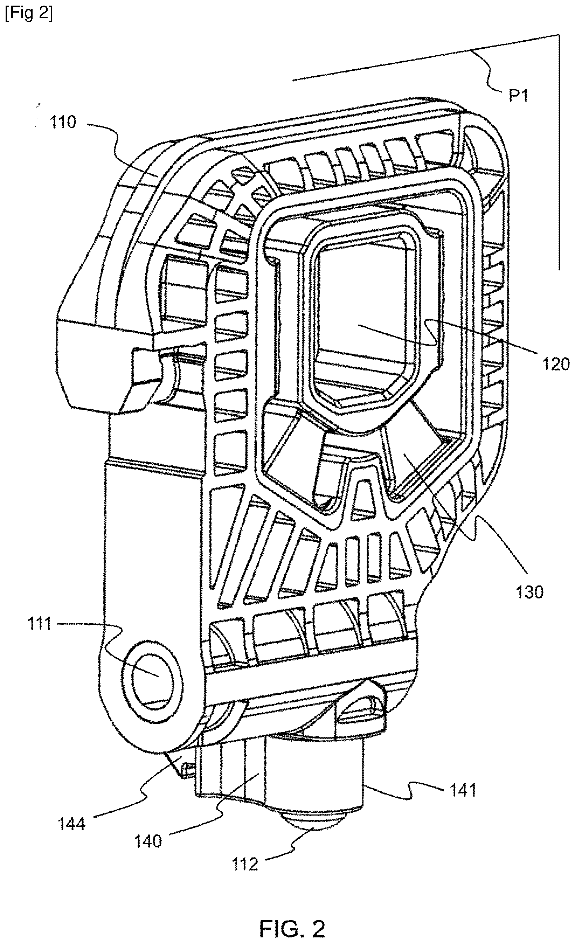

La butée élastique 140 peut également prendre une seconde position angulaire d'utilisation, dite position angulaire d'utilisation gauche, dans laquelle la butée élastique 140 saille du plan principal P1, d'un second côté du plan principal P1, comme cela est illustré à la figure 2. En particulier, on observe que la butée élastique 140 saille également à angle droit du plan principal P1.

En d'autres termes, dans la position angulaire d'utilisation gauche, la butée élastique 140 est orientée selon l'axe Y du véhicule, vers la gauche du véhicule.

On comprend ainsi qu'un seul modèle de support de suspension, c'est-à-dire le support 100 de suspension selon l'invention, est utilisable en tant que support de suspension droit ou gauche par simple passage de la butée élastique 140 dans une position angulaire d'utilisation droite ou gauche.

Afin de réaliser une fonction de positionnement non seulement lorsque la butée élastique 140 est sollicitée en compression, mais également lorsqu'elle est sollicitée en traction, la butée élastique 140 est configurée pour être attelée par sa seconde extrémité 143 au cadre d'échangeur thermique, lorsqu'elle se trouve dans l'une des positions angulaires d'utilisation.

De cette manière, lorsque la dilatation est asymétrique à travers le cadre d'échangeur thermique, ou lorsque le cadre se contracte (lorsqu'il est exposé à des températures négatives importantes, par exemple), la butée élastique 140 attelée au cadre est étirée, alors qu'une butée élastique simple, non attelée, ne serait pas sollicitée en traction.

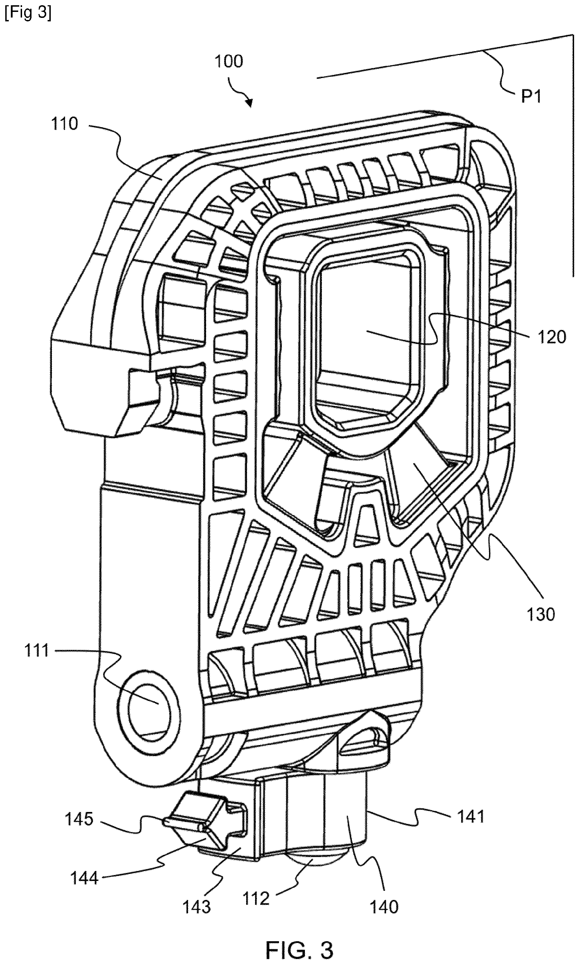

A des fins de transport et de manipulation, la butée élastique 140 prend avantageusement une troisième position angulaire caractéristique, qui est une position angulaire de rangement, dans laquelle la butée élastique 140 est située dans le plan principal P1 sans saillir de ce dernier. Cette position est illustrée à la figure 3, et correspond à une position neutre, dans laquelle est positionnée la butée élastique 100 après son assemblage, jusqu'à son montage du côté droit ou gauche de l'échangeur thermique.

On s'intéresse maintenant plus en détail à la partie inférieure du support 100 de suspension, qui comporte le pion 112 et la butée élastique 140.

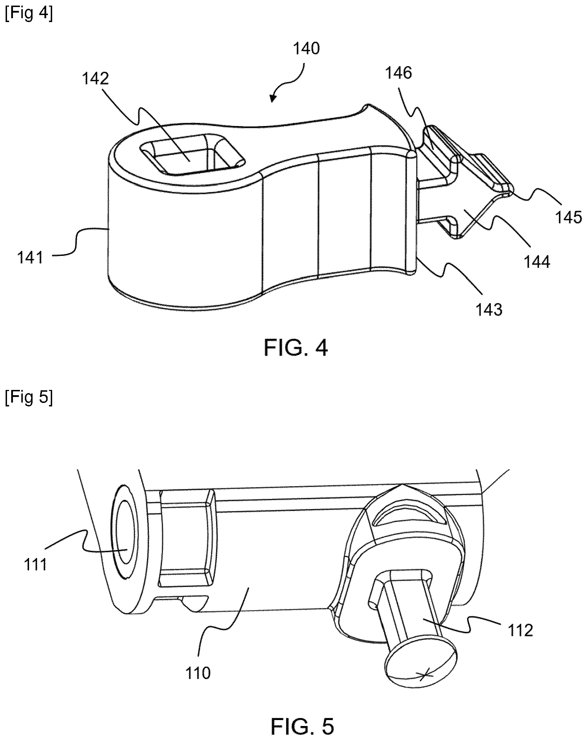

La butée élastique 140, représentée isolée du support de suspension à la figure 4, comporte une ouverture 142 sur sa première extrémité 141, l'ouverture étant pratiquée selon une direction transversale de la butée élastique, c'est-à-dire une ouverture selon la direction Z, lorsque le support 100 est monté sur un véhicule.

Le pion 112, visible sur une vue de détail à la figure 5, est préférentiellement formé dans la même pièce que l'armature extérieure 110, et saille de la partie inférieure du support 100 de suspension, selon la direction Z lorsque le support 100 est monté sur un véhicule.

La forme de la section du pion 112 et la forme de l'ouverture 142 de la butée 140 sont complémentaires, c'est-à-dire que la butée 140 peut, dans au moins une position dans laquelle les formes sont orientées à l'identique, être glissée sur le pion 112. En particulier, la forme est choisie de manière à ce qu'au moins deux positions angulaires caractéristiques puissent être prises par la butée.

Préférentiellement, on choisit pour cela des formes complémentaires polygonales, telles par exemple un carré, ou encore un octogone. Cependant, d'autres formes, non polygonales, permettant au minimum de réaliser les deux positions angulaires droite et gauche, peuvent être choisies.

De préférence, la forme complémentaire est un carré, cette forme permettant de réaliser les deux positions angulaires d'utilisation et la position de rangement le plus simplement et de manière la plus économique. On précise ici que la notion de carré n'est pas nécessairement entendue strictement, au sens mathématique, mais que notamment les sommets du carré peuvent être adoucis par des congés, comme cela est par exemple visible aux figures 4 et 5.

On comprend que la butée élastique 140 emmanchée sur le pion 112 est ainsi apte à prendre une pluralité de positions caractéristiques distinctes, dont la première et la seconde position angulaire d'utilisation et la position angulaire de rangement, et de passer d'une position caractéristique à une autre par la combinaison d'une rotation autour du pion 112, et d'une déformation élastique de l'ouverture 142 de la butée élastique 140.

En effet, il est aisément compréhensible que toute forme différente d'un cercle implique une déformation d'un élément par rapport à l'autre lors d'une telle rotation. En l'occurrence, le matériau de la butée élastique 140 étant un matériau élastique, c'est cette dernière qui se déforme, de manière réversible, lors de la rotation.

En d'autres termes, un certain effort est à fournir pendant la rotation lors du passage d'une position caractéristique à une autre, ce qui a pour effet de rendre les positions caractéristiques « stables », de façon à ce qu'elles ne soient pas modifiées accidentellement.

On précise que, de préférence, les formes complémentaires de l'ouverture 142 de la butée élastique 140 et du pion 112 sont de tailles légèrement différentes, afin d'obtenir un serrage d'une pièce sur l'autre, participant à la stabilité d'une position caractéristique « stable ». Plus précisément, l'ouverture 142 de la butée élastique 140 est légèrement plus petite que la section du pion 112. Dans l'exemple d'une forme complémentaire qui serait un carré, on peut par exemple choisir une ouverture 142 carrée de dimensions 5mm par 5mm, et une section carrée du pion 112 de dimensions 6mm par 6mm.

Afin que la butée élastique 140 ne se désolidarise pas axialement du pion 112, celui-ci est muni d'une tête de retenue à son extrémité, la tête étant de section légèrement plus importante que la section du pion 112. Lors du montage de la butée élastique 140 sur le pion 112, l'ouverture 142 de la butée élastique 140 se déforme légèrement lors du passage sur la tête du pion 112, jusqu'à ce que la butée élastique 140 soit entièrement emmanchée sur le pion 112.

Comme il a été exposé plus en amont, la butée élastique 140 comporte un élément élastique d'attelage 144 au cadre d'échangeur thermique sur sa seconde extrémité 143.

L'élément élastique d'attelage 144 comporte un moyen de retenue de l'élément élastique d'attelage dans la pièce automobile. Un tel moyen de retenue est par exemple réalisé par une surface de retenue d'une tête d'attelage formée directement dans la butée élastique, comme cela est visible notamment sur la figure 1.

Selon un exemple, comme représenté notamment à la figure 4, la tête d'attelage peut être de forme générale d'un harpon, ou de flèche, présentant une pointe 145 et une surface 146 d'appui, ou de retenue, qui joue le rôle de moyen de retenue, orientée en opposition à la pointe 145.

Ainsi, la tête d'attelage est apte à être insérée, par déformation élastique, dans une lumière du cadre d'échangeur thermique, et à être retenue dans cette lumière par une surface interne de la lumière formant butée avec la surface d'appui 146 de la tête d'attelage.

La lumière du cadre d'échangeur thermique est par exemple une ouverture 142 longitudinale telle une rainure, ou un rail en forme de U, présentant deux surfaces d'appui sur l'extrémité de ses branches, de manière à venir former butée contre la surface d'appui 146, qui est composée en deux parties de surface dans l'exemple de la figure 1. On comprend également que la largeur de la lumière est inférieure à la largeur de la tête d'attelage, de façon à ce que la tête d'attelage puisse être introduite aisément (grâce à la forme de flèche) en la déformant élastiquement, et de façon à ce que la tête d'attelage soit retenue dans la lumière lorsqu'elle revient à sa forme initiale.

Bien entendu, toute autre technique d'attelage, en coopération avec un élément du cadre d'échangeur thermique, peut être envisagée.

### Exemple d'un mode de mise en oeuvre particulier

Comme il a été expliqué plus en amont, dans le cadre d'une mise en oeuvre du support 100 de suspension dans un véhicule pour suspendre un cadre d'échangeur thermique, deux supports 100 de suspension au niveau des points de fixation inférieurs sont nécessaires.

Plus précisément, dans la mise en oeuvre sur un véhicule pour la suspension d'un cadre d'échangeur thermique, un support 100 de suspension dit droit est emmanché et attelé au cadre d'échangeur thermique d'un premier côté, dit côté droit, et un support 100 de suspension dit gauche est emmanché et attelé au cadre d'échangeur thermique d'un second côté, dit côté gauche.

Sur le support 100 de suspension droit, la butée élastique 140 prend une position angulaire d'utilisation gauche.

Sur le support 100 de suspension gauche, la butée élastique 140 prend une position angulaire d'utilisation droite.

Les supports de suspension droit et gauche sont fixés au châssis automobile par l'intermédiaire de l'entretoise 111, comme il a été expliqué plus en amont.

La mise en oeuvre sur un véhicule telle que décrite ci-dessus est réalisée par un procédé 200 de montage de la pièce automobile sur un châssis automobile au moyen de deux supports 100 de suspension.

Le procédé 200 comprend une étape 210 d'emmanchement d'un support de suspension 100 droit, respectivement gauche, sur une goupille droite, respectivement gauche, de la pièce automobile qui est en particulier un cadre d'échangeur thermique.

Le procédé 200 comprend une étape 220 de rotation de la butée élastique 140 du support 100 de suspension droit, respectivement gauche, dans la position angulaire d'utilisation gauche, respectivement droite.

Il apparaît à l'évidence que les étapes 210 et 220 précitées peuvent être exécutées selon un ordre indifférent, étant entendu que les supports 100 de suspension peuvent être configurés dans la position droite ou gauche avant leur mise en place sur le cadre d'échangeur thermique, ou inversement.

Le procédé 200 comprend ensuite une étape 230 d'attelage de la butée élastique 140 du support 100 de suspension droit, respectivement gauche, sur un côté droit, respectivement gauche, du cadre d'échangeur thermique.

Enfin, le procédé 200 comprend une étape 240 de fixation des supports de suspension 100 droit et gauche sur le châssis.

## Revendications

1. Support (100) de suspension d'une pièce automobile, en particulier d'un cadre d'échangeur thermique, sur un châssis automobile, ledit support prenant la forme globale d'une plaque comportant un plan principal, et ledit support comprenant :
• une armature extérieure (110) comportant un organe de fixation (111) audit châssis automobile,
• une armature intérieure (120) configurée pour être emmanchée sur une goupille de ladite pièce automobile, selon une direction perpendiculaire audit plan principal,
• un élément de suspension élastique (130) disposé entre ladite armature extérieure et ladite armature intérieure,
ledit support étant **caractérisé en ce qu'**il comprend :
• un pion (112) saillant de l'armature extérieure et s'étendant dans ledit plan principal, et,
• une butée élastique (140) longiforme emmanchée transversalement, par une première extrémité (141), sur ledit pion,
ladite butée élastique et ledit pion étant configurés de manière à ce que ladite butée élastique soit apte à prendre une pluralité de positions angulaires autour dudit pion, dont au moins :
• une première position angulaire d'utilisation, dite position angulaire d'utilisation droite, dans laquelle ladite butée élastique saille du plan principal, d'un premier côté dudit plan principal,
• une seconde position angulaire d'utilisation, dite position angulaire d'utilisation gauche, dans laquelle ladite butée élastique saille du plan principal, d'un second côté dudit plan principal,
ladite butée élastique étant configurée pour être attelée par sa seconde extrémité (143) à ladite pièce automobile lorsqu'elle se trouve dans l'une des positions angulaires d'utilisation.

2. Support (100) selon la revendication 1, dans lequel la butée élastique (140) et le pion (112) sont en outre configurés de manière à ce que ladite butée élastique soit apte à prendre une position angulaire de rangement, dans laquelle ladite butée élastique est située dans ledit plan principal sans saillir de ce dernier.

3. Support (100) selon la revendication 2, dans ladite butée élastique (140) comporte une ouverture (142) sur sa première extrémité (141), l'ouverture étant pratiquée selon une direction transversale de la butée élastique, et dans lequel la forme de la section du pion et la forme de l'ouverture sont complémentaires, la butée élastique emmanchée sur le pion étant apte à :
• prendre une pluralité de positions caractéristiques distinctes, dont la première et la seconde position angulaire d'utilisation et la position angulaire de rangement, et
• passer d'une position caractéristique à une autre par la combinaison d'une rotation autour du pion et d'une déformation élastique de l'ouverture.

4. Support (100) selon la revendication 3, dans lequel la forme de la section du pion (112) et la forme de l'ouverture (142) sont des formes polygonales complémentaires.

5. Support (100) selon la revendication 4, dans lequel lesdites formes polygonales complémentaire sont des carrés.

6. Support (100) selon l'une quelconque des revendications 1 à 5, dans lequel ladite butée élastique (140) comporte un élément élastique d'attelage (143) à ladite pièce automobile sur sa seconde extrémité, ledit élément élastique d'attelage comportant un moyen de retenue (146) de l'élément élastique d'attelage dans la pièce automobile.

7. Support (100) selon la revendication 6, dans lequel ledit élément élastique d'attelage (143) est une tête d'attelage formée directement dans la butée élastique (140).

8. Support (100) selon la revendication 7, dans lequel ladite tête d'attelage est de forme générale d'un harpon présentant une pointe (145) et une surface d'appui (146) orientée en opposition à ladite pointe, ladite tête étant ainsi apte à être insérée, par déformation élastique, dans une lumière de ladite pièce automobile, et à être retenue dans ladite lumière par une surface interne de la lumière formant butée avec ladite surface d'appui de la tête, qui forme ainsi un moyen de retenue de l'élément élastique dans la pièce automobile.

9. Support (100) selon l'une quelconque des revendications 1 à 8, dans lequel ladite butée élastique (140) est en matériau élastomère, et en particulier en éthylène-propylène-diène monomère, dit EPDM.

10. Véhicule automobile comprenant un châssis, une pièce automobile à suspendre et au moins un support (100) de suspension d'une pièce automobile selon l'une quelconque des revendications 1 à 9.

11. Véhicule selon la revendication 10, dans lequel la pièce automobile à suspendre est un cadre d'échangeur thermique, le véhicule comprenant
• un support (100) de suspension dit droit, emmanché et attelé audit cadre d'échangeur thermique d'un premier côté, dit côté droit, et
• un support (100) de suspension dit gauche, emmanché et attelé audit cadre d'échangeur thermique d'un second côté, dit côté gauche,
lesdits supports de suspension droit et gauche étant fixés audit châssis et
• la butée élastique (140) dudit support de suspension droit prenant une position angulaire d'utilisation gauche, et
• la butée élastique (140) dudit support de suspension gauche prenant une position angulaire d'utilisation droite.

12. Procédé (200) de montage d'une pièce automobile sur un châssis automobile au moyen de deux supports (100) de suspension selon l'une quelconque des revendications 1 à 9, comprenant les étapes de :
• emmanchement (210) d'un support (100) de suspension droit, respectivement gauche, sur une goupille droite, respectivement gauche, de la pièce automobile,
• rotation (220) de la butée élastique (140) dudit support de suspension droit, respectivement gauche, dans la position angulaire d'utilisation gauche, respectivement droite,
• attelage (230) de la butée élastique dudit support de suspension droit, respectivement gauche, sur un côté droit, respectivement gauche, de la pièce automobile,
• fixation (240) des supports de suspension droit et gauche sur ledit châssis.

## Patentansprüche

1. Aufhängungsträger (100) für ein Kraftfahrzeugteil, insbesondere einen Wärmetauscherrahmen, an einem Kraftfahrzeugfahrgestell, wobei der Träger die allgemeine Form einer Platte mit einer Hauptebene annimmt und der Träger Folgendes aufweist:
• einen äußeren Mantel (110), der ein Befestigungsglied (111) am Kraftfahrzeugfahrgestell umfasst,
• einen inneren Mantel (120), der dazu konfiguriert ist, in einer Richtung senkrecht zur Hauptebene auf einen Stift des Kraftfahrzeugteils aufgesteckt zu werden,
• ein elastisches Aufhängungselement (130), das zwischen dem äußeren Mantel und dem inneren Mantel angeordnet ist,
wobei der Träger **dadurch gekennzeichnet ist, dass** er Folgendes umfasst:
• einen Zapfen (112), der vom äußeren Mantel vorsteht und sich in der Hauptebene erstreckt, und
• einen länglichen elastischen Anschlag (140), der über ein erstes Ende (141) quer auf den Zapfen aufgesteckt ist,
wobei der elastische Anschlag und der Zapfen derart konfiguriert sind, dass der elastische Anschlag dazu geeignet ist, eine Vielzahl von Winkelpositionen um den Zapfen herum einzunehmen, darunter mindestens:
• eine erste Gebrauchswinkelposition, die sogenannte rechte Gebrauchswinkelposition, in der der elastische Anschlag auf einer ersten Seite der Hauptebene aus der Hauptebene herausragt,
• eine zweite Gebrauchswinkelposition, die sogenannte linke Gebrauchswinkelposition, in der der elastische Anschlag auf einer zweiten Seite der Hauptebene aus der Hauptebene herausragt,
wobei der elastische Anschlag dazu konfiguriert ist, mit seinem zweiten Ende (143) an das Kraftfahrzeugteil angekuppelt zu werden, wenn er sich in einer der Gebrauchswinkelpositionen befindet.

2. Träger (100) nach Anspruch 1, wobei der elastische Anschlag (140) und der Zapfen (112) ferner derart konfiguriert sind, dass der elastische Anschlag eine Lagerungswinkelposition einnehmen kann, in der sich der elastische Anschlag in der Hauptebene befindet, ohne aus dieser herauszuragen.

3. Träger (100) nach Anspruch 2, wobei der elastische Anschlag (140) an seinem ersten Ende (141) eine Öffnung (142) aufweist, wobei die Öffnung in einer Querrichtung des elastischen Anschlags vorgesehen ist, und wobei die Form des Querschnitts des Zapfens und die Form der Öffnung komplementär sind, wobei der am Zapfen aufgesteckte elastische Anschlag für Folgendes geeignet ist:
• Einnehmen einer Vielzahl unterschiedlicher charakteristischer Positionen, darunter die erste und die zweite Gebrauchswinkelposition und die Lagerungswinkelposition, und
• Wechseln von einer charakteristischen Position in eine andere durch die Kombination einer Drehung um den Zapfen und einer elastischen Verformung der Öffnung.

4. Träger (100) nach Anspruch 3, wobei die Form des Querschnitts des Zapfens (112) und die Form der Öffnung (142) komplementäre polygonale Formen sind.

5. Träger (100) nach Anspruch 4, wobei die komplementären polygonalen Formen Quadrate sind.

6. Träger (100) nach einem der Ansprüche 1 bis 5, wobei der elastische Anschlag (140) an seinem zweiten Ende ein elastisches Element (143) zur Kupplung mit dem Kraftfahrzeugteil umfasst, wobei das elastische Kupplungselement ein Haltemittel (146) für das elastische Kupplungselement im Kraftfahrzeugteil umfasst.

7. Träger (100) nach Anspruch 6, wobei das elastische Kupplungselement (143) ein Kupplungskopf ist, der direkt im elastischen Anschlag (140) ausgebildet ist.

8. Träger (100) nach Anspruch 7, wobei der Kupplungskopf die allgemeine Form einer Harpune hat, die eine Spitze (145) und eine entgegengesetzt zur Spitze ausgerichtete Auflagefläche (146) aufweist, wobei der Kopf dadurch dazu geeignet ist, durch elastische Verformung in einen Schlitz des Kraftfahrzeugteils eingeführt zu werden und in dem Schlitz durch eine Innenfläche des Schlitzes gehalten zu werden, die einen Anschlag mit der Auflagefläche des Kopfes bildet, der somit ein Haltemittel für das elastische Element in dem Kraftfahrzeugteil bildet.

9. Träger (100) nach einem der Ansprüche 1 bis 8, wobei der elastische Anschlag (140) aus einem Elastomermaterial und insbesondere aus Ethylen-Propylen-Dien-Monomer, genannt EPDM, besteht.

10. Kraftfahrzeug, das ein Fahrgestell, ein aufzuhängendes Kraftfahrzeugteil und mindestens einen Aufhängungsträger (100) für ein Kraftfahrzeugteil nach einem der Ansprüche 1 bis 9 umfasst.

11. Fahrzeug nach Anspruch 10, wobei das aufzuhängende Kraftfahrzeugteil ein Wärmetauscherrahmen ist, wobei das Fahrzeug Folgendes umfasst:
• einen sogenannten geraden Aufhängungsträger (100), der auf einer ersten Seite, der sogenannten rechten Seite, aufgesteckt und mit dem Wärmetauscherrahmen gekuppelt ist, und
• einen sogenannten linken Aufhängungsträger (100), der auf einer zweiten Seite, der sogenannten linken Seite, aufgesteckt und mit dem Wärmetauscherrahmen gekuppelt ist,
wobei der rechte und der linke Aufhängungsträger am Fahrgestell befestigt sind und
• der elastische Anschlag (140) des rechten Aufhängungsträgers eine linke Gebrauchswinkelposition einnimmt, und
• der elastische Anschlag (140) des linken Aufhängungsträgers eine rechte Gebrauchswinkelposition einnimmt.

12. Verfahren (200) zur Montage eines Kraftfahrzeugteils an einem Kraftfahrzeugfahrgestellt mittels zwei Aufhängungsträger (100) nach einem der Ansprüche 1 bis 9, umfassend die folgenden Schritte:
• Aufstecken (210) eines rechten bzw. eines linken Aufhängungsträgers (100) auf einen rechten bzw. einen linken Stift des Kraftfahrzeugteils,
• Drehen (220) des elastischen Anschlags (140) des rechten bzw. des linken Aufhängungsträgers in die linke bzw. die rechte Gebrauchswinkelposition,
• Ankuppeln (230) des elastischen Anschlags des rechten bzw. des linken Aufhängungsträgers an eine rechte bzw. eine linke Seite des Kraftfahrzeugteils,
• Befestigen (240) des rechten und des linken Aufhängungsträgers am Fahrgestell.

## Claims

1. A support (100) for suspending an automotive part, in particular a heat exchanger frame, on an automotive chassis, said support taking the overall shape of a plate including a main plane, and said support comprising:
• an outer armature (110) including a member (111) for fastening to said automotive chassis,
• an inner armature (120) configured to be fitted onto a pin of said automotive part, in a direction perpendicular to said main plane,
• an elastic suspension element (130) disposed between said outer armature and said inner armature,
said support being **characterized in that** it comprises:
• a pin (112) protruding from the outer armature and extending in said main plane, and,
• an elongated elastic stop (140) transversely fitted, by a first end (1), onto said pin,
said elastic stop and said pin being configured so that said elastic stop is capable of taking a plurality of angular positions around said pin, including at least:
• one first angular position of use, called right angular position of use, in which said elastic stop protrudes from the main plane, on a first side of said main plane,
• a second angular position of use, called left angular position of use, in which said elastic stop protrudes from the main plane, on a second side of said main plane,
said elastic stop being configured to be coupled by the second end (143) thereof to said automotive part when it is in one of the angular positions of use.

2. The support (100) according to claim 1, wherein the elastic stop (140) and the pin (112) are further configured so that said elastic stop is capable of taking an angular storage position, in which said elastic stop is located in said main plane without protruding from the latter.

3. The support (100) according to claim 2, said elastic stop (140) includes an opening (142) on the first end (141) thereof, the opening being made in a transverse direction of the elastic stop, and in which the shape of the section of the pin and the shape of the opening are complementary, the elastic stop fitted onto the pin being capable of:
• taking a plurality of distinct characteristic positions, including the first and second angular positions of use and the angular storage position, and
• moving from one characteristic position to another by the combination of a rotation around the pin and an elastic deformation of the opening.

4. The support (100) according to claim 3, wherein the shape of the section of the pin (112) and the shape of the opening (142) are complementary polygonal shapes.

5. The support (100) according to claim 4, wherein said complementary polygonal shapes are squares.

6. The support (100) according to any one of claims 1 to 5, wherein said elastic stop (140) includes an elastic element (143) for coupling to said automotive part on the second end thereof, said elastic coupling element including means (146) for retaining the elastic coupling element in the automotive part.

7. The support (100) according to claim 6, wherein said elastic coupling element (143) is a coupling head formed directly in the elastic stop (140).

8. The support (100) according to claim 7, wherein said coupling head is of the general shape of a harpoon having a point (145) and a bearing surface (146) oriented in opposition to said point, said head thus being capable of being inserted, by elastic deformation, into a window of said automotive part, and of being retained in said window by an inner surface of the window forming a stop with said bearing surface of the head, which thus forms means for retaining the elastic element in the automotive part.

9. The support (100) according to any one of claims 1 to 8, wherein said elastic stop (140) is made of elastomeric material, and in particular of ethylene-propylene-diene monomer, called EPDM.

10. A motor vehicle comprising a chassis, an automotive part to be suspended and at least one support (100) for suspending an automotive part according to any one of claims 1 to 9.

11. The vehicle according to claim 10, wherein the automotive part to be suspended is a heat exchanger frame, the vehicle comprising
• a suspension support (100) called right suspension support, fitted and coupled to said heat exchanger frame on a first side, called right side, and
• a suspension support (100) called left suspension support, fitted and coupled to said heat exchanger frame on a second side, called left side,
said right and left suspension supports being fastened to said chassis and
• the elastic stop (140) of said right suspension support taking a left angular position of use, and
• the elastic stop (140) of said left suspension support taking a right angular position of use.

12. A method (200) for mounting an automotive part on an automotive chassis by means of two suspension supports (100) according to any one of claims 1 to 9, comprising the steps of:
• fitting (210) a right, respectively left, suspension support (100), onto a right, respectively left, pin, of the automotive part,
• rotating (220) the elastic stop (140) of said right, respectively left, suspension support, in the left, respectively right, angular position of use,
• coupling (230) the elastic stop of said right, respectively left, suspension support, on a right, respectively left, side, of the automotive part,
• fastening (240) the right and left suspension supports on said chassis.
